# NEUE EUROPÄISCHE PATENTSCHRIFT

(11) **EP 1 699 562 B2**
(45) Veröffentlichungstag und Bekanntmachung des Hinweises auf die Entscheidung über den Einspruch: **25.09.2019**
(45) Hinweis auf die Patenterteilung: 11.04.2012
(21) Anmeldenummer: 04791073.2
(22) Anmeldetag: 30.10.2004
(51) Int. Cl.: B04B 11/02, B04B 1/08, A01J 11/10

(54) **VERFAHREN ZUR VERMEIDUNG VON VERSTOPFUNGEN DER DURCHFLUSSWEGE EINES SEPARATORS**
METHOD FOR PREVENTING BLOCKAGES IN THE FLOW PATHS OF A SEPARATOR
PROCEDE POUR EVITER DES PHENOMENES D'ENGORGEMENT DE VOIES D'ECOULEMENT D'UN SEPARATEUR

(30) Priorität: 23.12.2003 DE 10361520
(43) Veröffentlichungstag der Anmeldung: 13.09.2006
(73) Patentinhaber: GEA Mechanical Equipment GmbH, 59302 Oelde (DE)
(72) Erfinder: KLAPPER, Siegfried, 33442 Herrzebrock-Clarholz (DE); BÄHNER, Ludger, 59302 Oelde (DE)
(74) Vertreter: Dantz, Jan Henning
(86) Internationale Anmeldenummer: PCT/EP2004/012319
(87) Internationale Veröffentlichungsnummer: WO 2005/065835

(56) Entgegenhaltungen:
- WO-A1-03/007700
- DE-A- 1 900 592
- DE-A- 3 601 814
- DE-A- 19 820 870
- DE-B- 1 075 503
- DE-C- 691 386
- GB-A- 711 695
- GB-A- 991 500
- GB-A- 2 133 503
- US-A- 2 628 023
- US-A- 2 761 618
- US-A- 3 535 158
- US-A- 3 623 657
- US-A- 4 151 950
- US-A- 4 689 157
- US-A- 5 405 307
- US-A- 5 591 469
- US-B1- 6 468 574
- US-B2- 6 475 132

## Beschreibung

Die Erfindung betrifft ein Verfahren zur Vermeidung von Verstopfungen der Durchflusswege und - leitungen eines Separators bei der Verarbeitung eines fetthaltigen Ausgangsproduktes.

In vielen lebensmittelverarbeitenden Unternehmen werden Separatoren für unterschiedlichste Applikationen und Leistungsspektren eingesetzt. Die Separatoren müssen i.allg. hinsichtlich ihrer Konstruktion und Auslegung an diese unterschiedlichen Anforderungen angepasst werden. Sie sind damit zwar innerhalb des vordefinierten Aufgabenfeldes bzw. Prozesses einsetzbar, reagieren aber auf Abweichungen aus dem vorgegeben Rahmen - so auf Leistungsveränderungen oder Veränderungen der Zusammensetzung der zu verarbeitenden Produkte empfindlich bzw. vielfach mit Störungen.

Aus der DE 100 36 085 ist es bekannt, bei der Entkeimung von Molke die Rohmolke in die Bestandteile Rahmmolke, entrahmte Molke (Magermilch) und Feststoffe (Schlamm mit Keimen) zu trennen, wobei die Zentrifugaltrennung im Separator derart erfolgt, dass der Fettgehalt in der Rahmmolke mehr als 45 Prozent beträgt. Daraufhin wird die Magermilch entkeimt und danach in die Rahmmolke, die keiner weiteren Entkeimung unterzogen wurde, zurückgeleitet und das bei der Rückleitung der Magermilch in den Rahm entstehende Rahm/Magermilchgemisch pasteurisiert. Auf eine Hocherhitzung auf bis zu 135 °C kann mit diesem Verfahren verzichtet werden.

Aus der DE 198 07 294 ist eine Entrahmungsstation mit einem Klärseparator und einem diesem nachgeschalteten Entrahmungsseparator bekannt, wobei eine Rezirkulationsleitung für entrahmte Molke - also für den Anteil mit verringertem Fettgehalt - vom Ablauf des Entrahmungsseparators zum Zulauf des Klärseparators führt (eine Bypassleitung), um den Fettverlust gering zu halten und die Qualität des gewonnenen Käsestaubes zu verbessern.

Die DE 198 20 870 schlägt vor, bei der Molkeentrahmung mittels eines Separators eine Teilmenge von 0,5 % bis 2 % des ablaufenden Molkerahmes - also des mehr Fett enthaltenden Anteils - in die dem Separator zugeführte Rohmolke zurückzuleiten, um die Produktqualität zu verbessern.

Die US 4 151 950 offenbart einen Klärseparator. In diesem Klärseparator wird die geklärte Flüssigkeitsphase über Kanäle und eine Schälscheibe abgeleitet. Die aufkonzentrierte Feststoffphase wird über einen Kanal eines Ventils zur Schälscheibe gefördert und von dort über eine Leitung und ein Ventil weitergeleitet. Eine Regelungseinrichtung mit Ventil bewirkt dabei auf eine gleichbleibende Viskosität des Produktes.

Die DE 691 386 offenbart eine Zentrifuge mit welcher Rahm mit einem bestimmten Fettgehalt aus Magermilch abgetrennt werden kann. Es ist Ziel der Vorrichtung der DE 691 386 eine Milch mit einem bestimmten Fettgehalt bereitzustellen.

Die US 2 682 023 offenbart einen Separator mit welchem Milch in Rahm und Magermilch verarbeitet werden kann. Dabei wird durch eine Zelle der elektrische Widerstand der Magermilch und durch eine weitere Zelle der elektrische Widerstand des Rahms gemessen, wodurch wiederum der Fettgehalt in beiden Phasen bestimmbar ist. Die Vorrichtung liefert dabei stets gleichbleibend Magermilch und Rahm mit einem festgelegten Fettgehalt, wobei die Einstellung dieses Fettgehaltes über eine Steuerung, welche auf der Seite des Rahmauslasses angeordnet ist, erfolgt.

Bei der Trennung von Milch in entrahmte Milch und Rahm mittels Separatoren kann es durch eine zu hohe Fettkonzentration in der Rahmmolke zum Blockieren der Trommel, d.h. zu Verstopfen zumindest eines Teiles oder sämtlicher Durchflusswege des Separators kommsen. Im allgemeinen verstopft dabei ausgebutterter Rahm den Verteilerraum und/oder die Teller und/oder die Rahmabführung im Zentrum der Trommel und/oder die dem Separator nachgeschaltete Rahmableitung.

Kommt es zu dieser Blockade, können die Verstopfungen der Durchflusswege im Separator - hierunter sind die inneren Durchflussleitungen und Durchflusswege sowie die vom Separator wegführenden Ableitungen zu verstehen - nach dem Stand der Technik nur durch
a) eine Heißwasserzuführung über den Zulauf und
b) ein gleichzeitiges Androsseln des Magermilchablaufes oder eine Erhöhung der Zulaufleistung
wieder aufgelöst werden, was zu Produktverlusten und damit zu Kostennachteilen führt.

Zum Stand der Technik werden noch die Schriften DE 101 35 073 C2, DE 36 01 814 C2, US 27 17 119, DE 100 36 085 C1, EP 0 427 750 B1, DE 44 07 061 C2 und die DE 200 10 743 U1 genannt.

Die Erfindung hat vor diesem Hintergrund die Aufgabe, ein Verfahren zu schaffen, mit dem drohende Verstopfungen der Durchflusswege in der frühzeitig erkannt und vermieden werden.

Die Erfindung löst diese Aufgabe durch den Gegenstand des Anspruchs 1.

Vorteilhafte Ausgestaltungen sind den Unteransprüchen zu entnehmen.

Die Erfindung schafft nach Anspruch 1 ein Verfahren zur Vermeidung von Verstopfungen der Durchflusswege eines Separators bei der Verarbeitung eines fetthaltigen Ausgangsproduktes, insbesondere Milch oder Molke, bei dem während des Betriebes die Konzentration des Fettgehaltes einer ablaufenden Produktphase ermittelt und beim Erreichen oder Überschreiten eines vorgegebenen Fettgehaltgrenzwertes durch eine vorzugsweise automatische Veränderung der Betriebsparameter die Trennzone in der Separatortrommel zum Verhindern einer Verstopfung verschoben wird.

Auf diese Weise lassen sich drohende Verstopfungen frühzeitig erkennen und auf einfachste Weise vermeiden, so dass die nach dem Stand der Technik notwendigen Durchspülvorgänge und die mit diesen einhergehenden Produkt- und Zeitverluste bei der Produktion vermieden werden.

Zwar ist ein Verfahren zur Überwachung, Steuerung oder Regelung des Betriebs einer Zentrifuge aus der DE 101 35 073 bekannt. Nach dem in dieser Schrift offenbarten Verfahren wird mittels einer Messzelle am Ablauf der Zentrifuge eine Magermilch entnommen, daraufhin die Lichtdurchlässigkeit der Magermilchprobe ermittelt und der Fettgehalt bestimmt. In Abhängigkeit vom ermittelten Fettgehalt wird sodann die Einstellung der Zentrifuge z.B. periodisch überwacht, gesteuert und geregelt, insbesondere gereinigt. Die Möglichkeit zur Nutzung dieses automatisierten Verfahrens zur Vermeidung von Verstopfungen wurde jedoch bisher ebenso wenig erkannt wie auch die Möglichkeit, der drohenden Verstopfung auf einfachste Weise durch ein automatisches Verschieben der Trennzone in der Separatortrommel entgegenzuwirken.

Überraschend wird es durch einen Einsatz des Verfahren auch möglich, den Separator näher an seinem "Grenzbereich" zu betreiben, d.h., es wird möglich, im normalen Betrieb eine Voreinstellung der Fettkonzentration im Rahm von bis zu 44 Prozent vorzunehmen.

Besonders bevorzugt wird das Verfahren bei der Trennung von Kaltmilch in Rahm und Magermilch eingesetzt, wobei die Kaltmilch mit einer Temperatur von 2 - 15 °C, insbesondere 4 - 10°C in Rahm mit einem Fettgehalt von 28 - 45% und Magermilch getrennt wird. Gerade die Rahmphase bei der Kaltmilchseparierung neigt zur Ausbildung einer butterartigen Konsistenz und führt dann zu einer Verstopfung wenigstens eines Teils der Durchflusswege, die nur mit großem Aufwand und Zeitverlust bei der Produktion wieder zu beseitigen ist. Der Verschluss tritt dabei in Abhängigkeit von den Parametern der Kaltmilchseparierung auf. Hierzu zählen insbesondere die Produkttemperatur, die gefahrene Leistung und die Maschinenausführung (u.a. Tellerdurchmesser, Tellerdicke, Laschendicke). Typischerweise tritt der Verschluss bei einer Verarbeitung von Kaltmilch mit einer Temperatur T = 4°C beispielsweise bei einem Fettgehalt von 45% im Rahm auf. Mit der Erfindung lässt sich dieses Problem einfach und kostengünstig lösen.

Nach einer ersten Variante wird die Trennzone in der Trommel beim Erreichen oder Überschreiten des Grenzwertes nach innen verschoben, und zwar bevorzugt durch ein Androsseln eines Ventils im Magermilchablauf. Dieses Androsseln kann mittels eines Zeitgebers über einen vorgegebenen Zeitraum hinweg erfolgen.

Alternativ und/oder optional ist es denkbar, dass das Blockieren der Trommel durch eine Erhöhung der Zulaufleistung vermieden wird. Auch mit dieser Variante wird auf einfache aber effektive Weise ein "Zufahren" bzw. ein Verstopfen der Trommel des Separators mit einem butterartig festen Rahm auf einfache Weise verhindert. Dabei bietet es sich als vorteilhaft an, wenn die Zulaufleistung innerhalb eines Zeitraumes von 5 - 60 sec, insbesondere 5 - 20 sec, erhöht wird. Bereits eine derart kurze Änderung der Betriebsparameter kann das Verstopfen effektiv verhindern. Dies gilt insbesondere dann, wenn die Zulaufleistung um 5- 40 %, insbesondere 5- 20 % erhöht wird.

Zur Ermittlung des Fettgehaltes sind prinzipiell verschiedene Messmethoden denkbar. So kann die Ermittlung des Fettgehaltes mittels eines Masse-Durchflussmessers erfolgen, insbesondere mit separatem Dichteausgang. Derartige Messgeräte werden beispielsweise von der Firma Micro Motion angeboten.

Eine Vorrichtung zur Durchführung des erfindungsgemäßen Verfahrens weist eine Mess- und Steuerungseinrichtung auf, die zum Erkennen einer drohenden Verstopfung anhand einer Ermittlung der Konzentration des Fettgehaltes einer ablaufenden Produktphase und zur Veränderung der Betriebsparameter beim Erreichen oder Überschreiten eines vorgegebenen Fettgehaltgrenzwertes ausgelegt ist, derart, dass ein Verschieben der Trennzone in der Separatortrommel zum Verhindern einer Verstopfung über einen vorgegebenen Mindestzeitraum hinweg erfolgt. Bevorzugt ist der Separator entsprechend ein Kaltmilchseparator, der einen Zulauf für Kaltmilch sowie einen Magermilchablauf und einem Rahmablauf aufweist, wobei in dem Rahmablauf eine Messzelle angeordnet ist, mit welcher die Rahmkonzentration - der Fettgehalt des Rahmes bestimmbar ist. Die Messzelle wird nach zwei besonders einfachen und unkompliziert realisierbaren Varianten entweder mit einem Steuerungseingang eines Regelventils im Magermilchablauf oder mit einer Einrichtung zur Steuerung der Zulaufmenge an Kaltmilch in den Separator verbunden.

Weitere vorteilhafte Ausgestaltungen sind den übrigen Unteransprüchen zu entnehmen.

Nachfolgend wird das erfindungsgemäße Verfahren unter Bezug auf die Zeichnung näher beschrieben. Es zeigt:

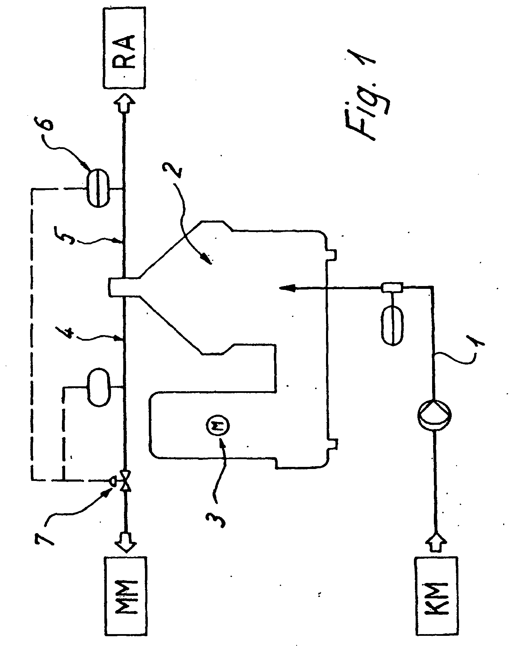

- Fig. 1: eine schematische Darstellung einer Vorrichtung zur Kaltmilchseparierung, die nach dem erfindungsgemäßen Verfahren arbeitet; und
- Fig. 2: eine schematische Darstellung eines Separators für die Vorrichtung aus Fig. 1.

Bei einem ersten Beispiel wird mittels eines Separators mit vertikaler Drehachse Kaltmilch KM, welche über einen Zulauf 1 in einen Separator 2 (bzw. eine Separatortrommel) mit einem Antrieb 3 geleitet wird, in dem Separator 2 in die Bestandteile entrahmte Milch (Magermilch) MM und Rahm RA getrennt und über einen Magermilchlablauf 4 und einen Rahmablauf 5 aus dem Separator 2 abgeleitet.

In dem bzw. an dem Ablauf 5 für den Rahm RA ist eine Messzelle 6 ein- bzw. angebracht, mit welcher die Rahmkonzentration - der Fettgehalt des Rahms RA bestimmbar ist. Die Messzelle 6 wird bevorzugt mit einer Steuerungseinrichtung des Separators 2 (hier nicht dargestellt) oder direkt mit einem Steuereingang eines Regelventils 7 verbunden.

Beim Überschreiten eines festgelegten Grenzwertes - von z.B. 43 Prozent Fettgehalt - im Rahm RA an der Messzelle 6 wird das Regelventil 7 im Magermilchablauf 4 in eine vorgegebene Stellung zugefahren.

Dieser Stellwert entspricht bevorzugt einem Ablaufdruck vom 0,5 bar unter der Überlaufgrenze des Separators 2. Gleichzeitig läuft bei diesem Verfahrensbeispiel ein variabel einstellbarer Timer bzw. Zeitgeber ab, der das Regelventil in der o.g. Stellung hält.

Durch das schnelle Zufahren des Regelventils wird die Trennzone im Separator bzw. in der Separatortrommel nach innen verschoben. Gleichzeitig wird durch die einhergehende Druckerhöhung auf dem Magermilchablauf der Rahm aus dem Zentrum der Trommel verdrängt.

Nach dem Ablauf des Timers bzw. Zeitgebers fährt das Regelventil 7 im Magermilchablauf 4 wieder in eine Position zurück, die dem vorgegebenen Rahmfettgehalt von z.B. 40 Prozent entspricht.

Durch die Regelung über den Magermilchablauf in Verbindung mit einem vorgegebenen Grenzwert gegen ein Blockieren bzw. Verstopfen der Trommel können folgende Parameter kompensiert werden:
- ein erhöhter Rahmfettgehalt im Zulauf,
- eine Temperaturreduzierung und
- eine Zulaufleistungsreduzierung.

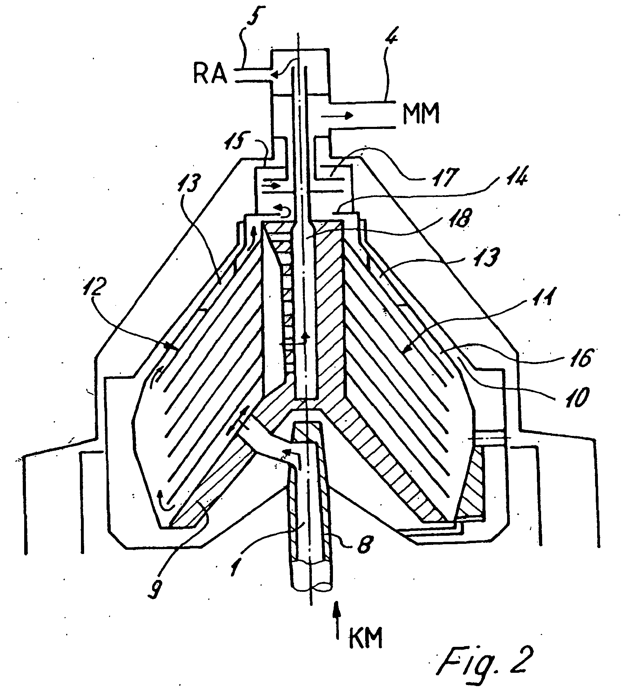

Vorteilhaft für die einwandfreie Funktion ist eine entsprechende konstruktive Ausgestaltung von Trommel- und Greiferausführung eines Kaltmilchseparators. Ein entsprechendes Ausführungsbeispiel ist in Fig. 2 dargestellt.

Der hier dargestellte Separator dient zur Kaltmilchseparierung. Sein Zulauf 1 für die Kaltmilch KM führt von unten durch eine Spindel 8 und einen Verteiler 9 in die Separatortrommel 10, in der ein Tellerpaket 11 mit einem Scheideteller 12 angeordnet ist.

Bei einem ersten Beispiel wird mittels eines Separators Kaltmilch KM, welche über einen Zulauf 1 in einen Separator 2 mit einem Antrieb 3 geleitet wird, in dem Separator 2 in die Bestandteile entrahmte Milch (Magermilch) MM und Rahm RA getrennt und über Abläufe 4 und 5 aus dem Separator 2 abgeleitet.

In dem bzw. an dem Ablauf 5 für den Rahm RA ist eine Messzelle 6 ein- bzw. angebracht, mit welcher die Rahmkonzentration - der Fettgehalt des Rahmes bestimmbar ist. Die Messzelle 6 wird bevorzugt mit einer Steuerungseinrichtung des Separators 2 (hier nicht dargestellt) oder direkt mit einem Steuereingang eines Regelventils 7 verbunden.

Ein Drallraum 13 in einer Ableitung 16 für Magermilch MM an einem Scheideteller 12 und eine Regulierscheibe 14 mit relativ großem Durchmesser gegenüber dem Überlaufdurchmesser im Greiferkammerdeckel 15 im Magermilchablauf wirken sich vorteilhaft aus, insbesondere um eine Voreinstellung der Rahmenkonzentration von ca. 44 Prozent und eine Androsselung des Magermilchablaufdruckes zu ermöglichen. Eine entsprechende Trommelkonstruktion gewährleistet ferner eine große Bandbreite zur Regelung des Magermilchdruckes.

Eine Schälscheibe 17 dient zur Ableitung der Magermilch MM und eine zentrische Sammelleitung 18 in der Drehachse zur Ableitung des Rahmes RA.

Je größer der Durchmesserunterschied zwischen der Regulierscheibe 14 und der Überlaufkante 15 am Greiferdeckel ist, um so mehr kann man durch schlagartiges Zufahren des Magermilch-Regelventils die Trennzone verändern und der Rahm mit mehr Druck ausgeschoben werden.

Bei einem weiteren Ausführungsbeispiel der Regelung und des Verfahrens zum Verstopfen der Separatortrommel nach Art eines Antiblockiersystems erfolgt die "Antiblockierregelegung" über eine Erhöhung der Zulaufleistung und das damit einhergehende Ausschieben des Rahms.

Beim Überschreiten des Grenzwertes von 43 Prozent Rahmfettgehalt wird die Zulaufleistung beispielsweise schlagartig um mindestens 5.000 l/h erhöht. Hierdurch wird der Rahm um ca. 10% verdünnt und durch die Flüssigkeitsspiegelverschiebung in der Trommel wird der Rahm wiederum aus der Trommel verdrängt.

Bei dieser Verfahrensweise kann wiederum mit einer zuvor fest eingestellten Rahmkonzentration von z.B. 40 Prozent gefahren werden. Die Einstellung der Rahmkonzentration erfolgt bevorzugt über die Regulierscheibe 14, also unabhängig vom Magermilchablaufdruck rein über die Zulaufleistung.

Eine Regelung über die Zulaufleistung ist insbesondere bei der Verarbeitung von Kaltmilch KM zulässig, wenn man keinen Plattenapparat hat, der mit einer konstanten Leistung gefahren werden müsste. Eine Regelung über eine Rahmablaufregelung kann auf diese Weise eingespart werden. Das Androsseln der Rahmmenge ist nicht mehr notwendig.

**Bezugszeichenliste**

| | |
|---|---|
| Kaltmilch | KM |
| Magermilch | MM |
| Rahm | RA |
| | |
| Zulauf | 1 |
| Separator | 2 |
| Antrieb | 3 |
| Abläufe | 4 und 5 |
| Messzelle | 6 |
| Regelventil | 7 |
| Spindel | 8 |
| Verteiler | 9 |
| Separatortrommel | 10 |
| Tellerpaket | 11 |
| Scheideteller | 12 |
| Drallraum | 13 |
| Regulierscheibe | 14 |
| Greiferkammerdeckel | 15 |
| Ableitung | 16 |
| Schälscheibe | 17 |
| Sammelleitung | 18 |

## Patentansprüche

1. Verfahren zur Vermeidung von Verstopfungen der Durchflusswege eines Separators bei der Verarbeitung eines fetthaltigen Ausgangsproduktes, insbesondere Milch, mit folgenden Schritten:
A) zum Erkennen einer drohenden Verstopfung wird die Konzentration des Fettgehaltes einer ablaufenden Produktphase ermittelt; und
B) beim Erreichen oder Überschreiten eines vorgegebenen Fettgehaltgrenzwertes wird durch eine Veränderung der Betriebsparameter die Trennzone in der Separatortrommel zum Verhindern einer Verstopfung über einen vorgegebenen Mindestzeitraum hinweg verschoben.

2. Verfahren nach Anspruch 1, **dadurch gekennzeichnet, dass** es bei der Trennung von Kaltmilch in Rahm und Magermilch eingesetzt wird.

3. Verfahren nach Anspruch 2, **dadurch gekennzeichnet, dass** Kaltmilch mit einer Temperatur von 2 - 15 °C, insbesondere 4 - 10°C in Rahm mit einem Fettgehalt von 28 - 45% und Magermilch getrennt wird.

4. Verfahren nach Anspruch 1, **dadurch gekennzeichnet, dass** die Trennzone in der Trommel beim Erreichen oder Überschreiten eines Grenzwertes nach innen verschoben wird.

5. Verfahren nach einem der vorstehenden Ansprüche, **dadurch gekennzeichnet, dass** die Ermittlung des Fettgehaltes mittels eines Masse-Durchflussmessers erfolgt.

6. Verfahren nach einem der vorstehenden Ansprüche, **dadurch gekennzeichnet, dass** ein Masse-Durchflussmesser mit einem separaten Dichteausgang bei der Ermittlung des Fettgehaltes verwendet wird.

7. Verfahren nach einem der vorstehenden Ansprüche, **dadurch gekennzeichnet, dass** die Trennzone in der Trommel durch ein Androsseln eines Ventils im Magermilchablauf nach innen verschoben wird.

8. Verfahren nach einem der vorstehenden Ansprüche, **dadurch gekennzeichnet, dass** das Androsseln des Ventils im Magermilchablauf mittels eines Zeitgebers bzw. Timers über den vorgegebenen Zeitraum bzw. Mindestzeitraum hinweg erfolgt.

9. Verfahren nach einem der vorstehenden Ansprüche, **dadurch gekennzeichnet, dass** die Trennzone durch eine Erhöhung der Zulaufleistung verschoben wird.

10. Verfahren nach einem der vorstehenden Ansprüche, **dadurch gekennzeichnet, dass** die Zulaufleistung innerhalb eines Zeitraumes von 5 - 60 sec erhöht wird.

11. Verfahren nach einem der vorstehenden Ansprüche, **dadurch gekennzeichnet, dass** die Zulaufleistung innerhalb eines Zeitraumes von 5 - 20 sec, erhöht wird.

12. Verfahren nach einem der vorstehenden Ansprüche, **dadurch gekennzeichnet, dass** die Zulaufleistung um 5- 40 % erhöht wird.

13. Verfahren nach einem der vorstehenden Ansprüche, **dadurch gekennzeichnet, dass** die Zulaufleistung um 5- 20 % erhöht wird.

## Claims

1. Method for preventing blockages of the flow paths of a separator when processing a fatty starting product, in particular milk, the method comprising the following steps:
A) the concentration of the fat content of a current product phase is determined in order to detect an imminent blockage; and
B) if a preset fat content limit value is reached or exceeded, the separating zone in the separator drum is, by changing the operating parameters, displaced for a preset minimum period of time in order to prevent a blockage.

2. Method according to claim 1, **characterised in that** it is used for separating cold milk into cream and skimmed milk.

3. Method according to claim 2, **characterised in that** cold milk is separated into cream with a fat content of 28% to 45% and skimmed milk at a temperature of 2°C to 15°C, in particular 4°C to 10°C.

4. Method according to claim 1, **characterised in that** the separating zone in the drum is displaced inwards if a limit value is reached or exceeded.

5. Method according to any of the preceding claims, **characterised in that** the fat content is determined by means of a mass-flow meter.

6. Method according to any of the preceding claims, **characterised in that** a mass-flow meter with a separate density output is used in the determination of the fat content.

7. Method according to any of the preceding claims, **characterised in that** the separating zone in the drum is displaced inwards by restricting a valve in the skimmed milk outlet.

8. Method according to any of the preceding claims, **characterised in that** the valve in the skimmed milk outlet is restricted by means of a timer for the preset or minimum period of time.

9. Method according to any of the preceding claims, **characterised in that** the separating zone is displaced by increasing the feed power.

10. Method according to any of the preceding claims, **characterised in that** the feed power is increased within a period of time of 5 to 60 seconds.

11. Method according to any of the preceding claims, **characterised in that** the feed power is increased within a period of time of 5 to 20 seconds.

12. Method according to any of the preceding claims, **characterised in that** the feed power is increased by 5% to 40%.

13. Method according to any of the preceding claims, **characterised in that** the feed power is increased by 5% to 20%.

## Revendications

1. Procédé pour éviter des phénomènes d'engorgement de voies d'écoulement d'un séparateur lors du traitement d'un produit de départ contenant des graisses, en particulier du lait, comportant les étapes suivantes :
A) pour reconnaitre une menace de phénomène d'engorgement, la concentration de la teneur en graisses d'une phase de produit descendante est calculée ; et
B) lors de l'atteinte ou du dépassement d'une valeur limite de teneur en graisses prescrite, la zone de séparation dans le tambour du séparateur est déplacée par modification des paramètres de fonctionnement pour empêcher un phénomène d'engorgement au-delà d'une période minimale prescrite.

2. Procédé selon la revendication 1, **caractérisé en ce qu'**il est utilisé lors de la séparation de lait froid en crème et lait écrémé.

3. Procédé selon la revendication 2, **caractérisé en ce que** du lait froid est séparé à une température comprise entre 2 et 15°C, en particulier 4 et 10°C en crème avec une teneur en graisses de 28 à 45% et lait écrémé.

4. Procédé selon la revendication 1, **caractérisé en ce que** la zone de séparation dans le tambour est déplacée vers l'intérieur lors de l'atteinte ou du dépassement d'une valeur limite.

5. Procédé selon l'une quelconque des revendications précédentes, **caractérisé en ce que** le calcul de la teneur en graisses est effectué à l'aide d'un débitmètre de masse.

6. Procédé selon l'une quelconque des revendications précédentes, **caractérisé en ce qu'**un débitmètre de masse est utilisé avec une sortie de consistance séparée lors du calcul de la teneur en graisses.

7. Procédé selon l'une quelconque des revendications précédentes, **caractérisé en ce que** la zone de séparation dans le tambour est déplacée vers l'intérieur par un étranglement d'une soupape dans l'écoulement de lait écrémé.

8. Procédé selon l'une quelconque des revendications précédentes, **caractérisé en ce que** l'étranglement de la soupape est effectué dans l'écoulement de lait écrémé à l'aide d'une horloge ou d'un timer au-delà de la période prescrite ou période minimale.

9. Procédé selon l'une quelconque des revendications précédentes, **caractérisé en ce que** la zone de séparation est déplacée par une augmentation de la puissance d'alimentation.

10. Procédé selon l'une quelconque des revendications précédentes, **caractérisé en ce que** la puissance d'alimentation est augmentée dans une période de 5 à 60 secondes.

11. Procédé selon l'une quelconque des revendications précédentes, **caractérisé en ce que** la puissance d'alimentation est augmentée dans une période de 5 à 20 secondes.

12. Procédé selon l'une quelconque des revendications précédentes, **caractérisé en ce que** la puissance d'alimentation est augmentée de 5 à 40%.

13. Procédé selon l'une quelconque des revendications précédentes, **caractérisé en ce que** la puissance d'alimentation est augmentée de 5 à 20%.
